# EUROPEAN PATENT APPLICATION

(11) **EP 4 629 717 A1**
(43) Date of publication of application: **08.10.2025**
(21) Application number: 24835200.7
(22) Date of filing: 12.06.2024
(51) Int. Cl.: H04W 64/00

(54) **WIRELESS CONNECTION LOCATION METHOD AND APPARATUS, AND NODE, STORAGE MEDIUM AND PROGRAM PRODUCT**

(30) Priority: 06.07.2023 CN 202310826112
(71) Applicant: Ruijie Networks Co., Ltd., Fuzhou, Fujian 350002 (CN)
(72) Inventor: CHEN, Jianxiang, Fuzhou, Fujian 350002 (CN); ZHENG, Lei, Fuzhou, Fujian 350002 (CN); HU, Xiaokun, Fuzhou, Fujian 350002 (CN)
(74) Representative: Mathys & Squire
(86) International application number: PCT/CN2024/098742
(87) International publication number: WO 2025/007717

(57) **Abstract**

Embodiments of this application provide a wireless connection positioning method and apparatus, a node, a storage medium, and a program product. The wireless connection positioning method is applied to a positioning node and includes: receiving a transmission packet sent by a to-be-measured node, where the transmission packet includes a first indication, the first indication is used to indicate a target angle-of-arrival measurement, and the transmission packet further includes extended positioning information; and measuring an angle of arrival for the to-be-measured node based on the extended positioning information.

## Description

### CROSS-REFERENCE TO RELATED APPLICATIONS

This application claims priority to Chinese Patent Application No. 202310826112.1, filed with the China National Intellectual Property Administration on July 6, 2023, and entitled "WIRELESS CONNECTION POSITIONING METHOD AND APPARATUS, NODE, AND STORAGE MEDIUM", which is incorporated herein by reference in its entirety.

### TECHNICAL FIELD

This application relates to the field of wireless communication technologies, and in particular, to a wireless connection positioning method and apparatus, a node, a storage medium, and a program product.

### BACKGROUND

In a wireless local area network, to implement high-accuracy positioning, an angle-of-arrival (AOA) positioning algorithm is proposed. An antenna array is disposed in a positioning node. When a signal is transmitted, phase differences may be generated due to different receiving distances of antennas in the antenna array. A location of a to-be-measured node is calculated based on wireless transmission information corresponding to different antennas.

In the related art, an AOA measurement is performed through exchange of a transmission packet, where the transmission packet carries a long training field (LTF), and an angle of arrival is calculated by using the LTF in the transmission packet.

### SUMMARY

Embodiments of this application provide a wireless connection positioning method and apparatus, a node, a storage medium, and a program product.

According to a first aspect, an embodiment of this application provides a first wireless connection positioning method, applied to a positioning node. The method includes:
receiving a transmission packet sent by a to-be-measured node, where the transmission packet includes a first indication, the first indication is used to indicate a target angle-of-arrival measurement, and the transmission packet further includes extended positioning information; and
measuring an angle of arrival for the to-be-measured node based on the extended positioning information.

In the foregoing solution, the to-be-measured node uses the first indication to indicate whether it is a target angle-of-arrival measurement, to distinguish from a conventional positioning mode. If the transmission packet represents the target angle-of-arrival measurement, the to-be-measured node places the extended positioning information in the transmission packet, that is, the extended positioning information (denoted as an mLTF for distinguishing from an existing LTF) is added on a basis of original positioning information (that is, an LTF). The positioning node performs angle-of-arrival positioning more accurately based on the LTF and the mLTF.

In some optional implementations, the extended positioning information includes a plurality of pieces of sub-extended positioning information. Because a plurality of pieces of sub-extended positioning information are configured in one transmission packet, accuracy of angle-of-arrival positioning is further improved based on the plurality of pieces of sub-extended positioning information. In addition, when the plurality of pieces of sub-extended positioning information are received, it is also possible to switch between antenna groups and implement angle-of-arrival positioning on multiple antennas by using one packet.

In some optional implementations, the plurality of pieces of sub-extended positioning information include first sub-extended positioning information; and an antenna array in the positioning node includes a first antenna group; and
the measuring the angle of arrival for the to-be-measured node based on training symbols in the extended positioning information includes:
receiving training symbols in the first sub-extended positioning information by using the first antenna group; and
measuring the angle of arrival for the to-be-measured node based on the training symbols in the first sub-extended positioning information.

In the foregoing solution, for the first sub-extended positioning information, the training symbols in the first sub-extended positioning information are received by using the first antenna group; and the angle of arrival is accurately measured for the to-be-measured node based on the training symbols in the first sub-extended positioning information.

In some optional implementations, the plurality of pieces of sub-extended positioning information further include second sub-extended positioning information; and the antenna array in the positioning node further includes a second antenna group;
the method further includes:
receiving training symbols in the second sub-extended positioning information by using the second antenna group; and
the measuring the angle of arrival for the to-be-measured node based on the training symbols in the first sub-extended positioning information includes:
   measuring the angle of arrival for the to-be-measured node based on the training symbols in the first sub-extended positioning information and the training symbols in the second sub-extended positioning information.

In some optional implementations, the first antenna group is the same as or different from the second antenna group.

In the foregoing solution, if the first antenna group is the same as the second antenna group, the same antenna group receives the plurality of pieces of sub-extended positioning information, thereby further improving accuracy of angle-of-arrival positioning. If the first antenna group is different from the second antenna group, more positioning information is obtained by switching between antenna groups in a period of one transmission packet, to avoid frequent packet exchange, reduce air interface overheads, and reduce occupation of network resources, thereby improving communication performance and reducing the time required for angle-of-arrival positioning.

In addition, single-packet transmission is used in this embodiment, and periods corresponding to the extended positioning information are very close in time. Therefore, received noise interference is far weaker than that in multi-packet transmission, and measurement accuracy is further improved.

In some optional implementations, the first sub-extended positioning information corresponds to a first period, the first period includes durations corresponding to a plurality of LTFs, the second sub-extended positioning information corresponds to a second period, and a duration of the first period is the same as or different from a duration of the second period.

In the foregoing solution, a period corresponding to used sub-extended positioning information includes durations corresponding to a plurality of LTFs. Therefore, it is ensured that the two processes of normally receiving training symbols in the sub-extended positioning information by antennas in a corresponding antenna group and switching the antenna array can be performed smoothly.

In some optional implementations, the first sub-extended positioning information is adjacent to the second sub-extended positioning information, and the second sub-extended positioning information follows the first sub-extended positioning information; and the first sub-extended positioning information corresponds to a first period, and the second sub-extended positioning information corresponds to a second period; and
before the receiving the training symbols in the second sub-extended positioning information by using the second antenna group, the method further includes:
switching the antenna array in the positioning node to the second antenna group at a first switching time point, where
the first switching time point is a starting time point of the second period; or the first switching time point is a time point that is in the first period and that is at least a first preset duration away from a starting time point of the first period.

In the foregoing solution, the positioning node not only needs to normally receive the training symbols in the sub-extended positioning information by using the antennas in the corresponding antenna group in the period corresponding to the positioning information, but also needs to complete antenna array switching in periods corresponding to two adjacent pieces of sub-extended positioning information, and may switch to an antenna group corresponding to a next piece of sub-extended positioning information after parsing, or switch to a corresponding antenna group in a period corresponding to current sub-extended positioning information before parsing. The receiving process and the switching process cannot be performed simultaneously. By determining the first switching time point in the first period or the second period, the positioning node divides the period corresponding to the sub-extended positioning information into two parts: a receiving time segment and a switching time segment. This ensures that the receiving process and the switching process are performed smoothly and do not interfere with each other.

In some optional implementations, the extended positioning information is in a free bit of a data (English: data) field of the transmission packet or in a packet extension (English: Packet Extension, PE for short) field; or the extended positioning information is in an extended positioning field of the transmission packet, where the extended positioning field is a new field between the data field and the PE field.

In the foregoing solution, the extended positioning information is placed in the free bit of the data field or in the PE field, so that the extended positioning information can be carried without adding a new field on a basis of an existing packet; or an extended positioning field is added on a basis of an existing packet, so that the extended positioning information can be carried.

In some optional implementations, the transmission packet further includes a second indication, where the second indication is used to indicate that the transmission packet represents a response.

In the foregoing solution, the to-be-measured node places, in the transmission packet, the second indication indicating that the transmission packet represents the response, so that measurement information and response information are sent simultaneously, and that a quantity of transmitted packets is reduced.

In some optional implementations, the transmission packet includes a target quantity of sub-extended positioning information, where the target quantity is a preset quantity or is determined through negotiation between the positioning node and the to-be-measured node.

In the foregoing solution, the preset quantity of extended positioning information is set, or the quantity of sub-extended positioning information is negotiated between the positioning node and the to-be-measured node, so that the extended positioning information can be configured in different scenarios.

In some optional implementations, the transmission packet includes a third indication, where the third indication is used to indicate the target quantity.

In some optional implementations, the target quantity is a total quantity of antenna groups in the antenna array.

In the foregoing solution, the target quantity is equal to the total quantity of antenna groups in the antenna array in the positioning node, so that each antenna group has corresponding sub-extended positioning information, and that there is no redundant sub-extended positioning information.

In some optional implementations, before the receiving the transmission packet sent by the to-be-measured node, the method further includes:
sending a first negotiation packet to the to-be-measured node, where the first negotiation packet includes at least one of information representing support for the target angle-of-arrival measurement, a quantity of sub-extended positioning information, and a period corresponding to the extended positioning information; and
receiving a second negotiation packet sent by the to-be-measured node, where the second negotiation packet corresponds to the first negotiation packet.

In the foregoing solution, the foregoing two negotiation packets are exchanged before positioning, so that AOA positioning based on the extended positioning information is better supported.

According to a second aspect, an embodiment of this application provides a second wireless connection positioning method, applied to a to-be-measured node. The method includes:
placing extended positioning information in a transmission packet, and identifying a first indication in the transmission packet as indicating a target angle-of-arrival measurement; and
sending the transmission packet to a positioning node, so that the positioning node measures an angle of arrival for the to-be-measured node based on the extended positioning information.

In some optional implementations, the extended positioning information includes a plurality of pieces of sub-extended positioning information.

In some optional implementations, the plurality of pieces of sub-extended positioning information include first sub-extended positioning information, so that the positioning node receives training symbols in the first sub-extended positioning information by using a first antenna group in an antenna array and measures the angle of arrival for the to-be-measured node based on the training symbols in the first sub-extended positioning information.

In some optional implementations, the plurality of pieces of sub-extended positioning information further include second sub-extended positioning information, so that the positioning node receives training symbols in the second sub-extended positioning information by using a second antenna group in the antenna array and measures the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of LTFs, the second sub-extended positioning information corresponds to a second period, and a duration of the first period is the same as or different from a duration of the second period.

In some optional implementations, the first sub-extended positioning information is adjacent to the second sub-extended positioning information, and the second sub-extended positioning information follows the first sub-extended positioning information; and the first sub-extended positioning information corresponds to a first period, and the second sub-extended positioning information corresponds to a second period, so that before receiving the training symbols in the second sub-extended positioning information by using the second antenna group, the positioning node switches the antenna array in the positioning node to the second antenna group at a first switching time point, where the first switching time point is a starting time point of the second period; or the first switching time point is a time point that is in the first period and that is at least a first preset duration away from a starting time point of the first period.

In some optional implementations, the placing the extended positioning information in the transmission packet includes:
placing the extended positioning information in a free bit of a data field of the transmission packet or in a packet extension field of the transmission packet; or
placing the extended positioning information in an extended positioning field of the transmission packet, where the extended positioning field is a new field between the data field and the packet extension field.

In some optional implementations, the placing the extended positioning information in the transmission packet further includes:
placing a second indication in the transmission packet, where the second indication is used to indicate that the transmission packet represents a response.

In some optional implementations, the placing the extended positioning information in the transmission packet includes:
placing a target quantity of sub-extended positioning information in the transmission packet, where the target quantity is a preset quantity or is determined through negotiation between the positioning node and the to-be-measured node.

In some optional implementations, the placing the extended positioning information in the transmission packet further includes:
placing a third indication in the transmission packet, where the third indication is used to indicate the target quantity.

In some optional implementations, the target quantity is a total quantity of antenna groups in the antenna array.

In some optional implementations, before the placing the extended positioning information in the transmission packet, the method further includes:
receiving a first negotiation packet sent by the positioning node, where the first negotiation packet includes at least one of information representing support for the target angle-of-arrival measurement, a quantity of sub-extended positioning information, and a period corresponding to the extended positioning information; and
sending a second negotiation packet to the positioning node, where the second negotiation packet corresponds to the first negotiation packet.

According to a third aspect, an embodiment of this application provides a first wireless connection positioning apparatus, applied to a positioning node. The apparatus includes:
a first receiving module, configured to receive a transmission packet sent by a to-be-measured node, where the transmission packet includes a first indication, the first indication is used to indicate a target angle-of-arrival measurement, and the transmission packet further includes extended positioning information; and
a measurement module, configured to measure an angle of arrival for the to-be-measured node based on the extended positioning information.

According to a fourth aspect, an embodiment of this application provides a second wireless connection positioning apparatus, applied to a to-be-measured node. The apparatus includes:
a packet generation module, configured to place extended positioning information in a transmission packet, and identify a first indication in the transmission packet as indicating a target angle-of-arrival measurement; and
a first sending module, configured to send the transmission packet to a positioning node, so that the positioning node measures an angle of arrival for the to-be-measured node based on the extended positioning information.

According to a fifth aspect, an embodiment of this application provides a positioning node, including at least one processor and at least one memory, where the memory stores a computer program, and when the program is executed by the processor, the processor is enabled to perform the wireless connection positioning method according to any implementation of the first aspect.

According to a sixth aspect, an embodiment of this application provides a to-be-measured node, including at least one processor and at least one memory, where the memory stores a computer program, and when the program is executed by the processor, the processor is enabled to perform the wireless connection positioning method according to any implementation of the second aspect.

According to a seventh aspect, an embodiment of this application provides a wireless connection positioning system. The system includes:
a to-be-measured node, where the to-be-measured node is configured to send a transmission packet to the positioning node, where the transmission packet includes extended positioning information and a first indication, and the first indication is used to indicate a target angle-of-arrival measurement; and
the positioning node, where the positioning node is configured to receive the transmission packet, and measure an angle of arrival for the to-be-measured node based on the extended positioning information in the transmission packet.

According to an eighth aspect, an embodiment of this application provides a computer-readable storage medium. The computer-readable storage medium stores a computer program executable by a processor. When the program is run on the processor, the processor is enabled to perform the wireless connection positioning method according to any implementation of the first aspect or the second aspect.

According to a ninth aspect, this application provides a computer program product. The computer program product includes a computer program. When the computer program is executed by a processor, the wireless connection positioning method according to any implementation of the first aspect or the second aspect is implemented.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a schematic diagram of a communication system according to an embodiment of this application.
FIG. 2 is an interaction flowchart of a first wireless connection positioning method according to an embodiment of this application.
FIG. 3 is a schematic diagram of a first application scenario according to an embodiment of this application.
FIG. 4 is a schematic diagram of a second application scenario according to an embodiment of this application.
FIG. 5 is a schematic diagram of a period corresponding to sub-extended positioning information according to an embodiment of this application.
FIG. 6A is a schematic diagram of a structure of a first transmission packet according to an embodiment of this application.
FIG. 6B is a schematic diagram of a structure of a second transmission packet according to an embodiment of this application.
FIG. 6C is a schematic diagram of a structure of a third transmission packet according to an embodiment of this application.
FIG. 7 is an interaction flowchart of a measurement-on-request mode according to an embodiment of this application.
FIG. 8 is an interaction flowchart of a real-time measurement mode according to an embodiment of this application.
FIG. 9A is a schematic diagram of a first correspondence between sub-extended positioning information and an antenna group according to an embodiment of this application.
FIG. 9B is a schematic diagram of a second correspondence between sub-extended positioning information and an antenna group according to an embodiment of this application.
FIG. 10 is a schematic diagram of a third correspondence between sub-extended positioning information and an antenna group according to an embodiment of this application.
FIG. 11 is an interaction flowchart of a second wireless connection positioning method according to an embodiment of this application.
FIG. 12 is a schematic flowchart of a first wireless connection positioning method according to an embodiment of this application.
FIG. 13 is a schematic flowchart of a second wireless connection positioning method according to an embodiment of this application.
FIG. 14 is a schematic diagram of a structure of a first wireless connection positioning apparatus according to an embodiment of this application.
FIG. 15 is a schematic diagram of a structure of a second wireless connection positioning apparatus according to an embodiment of this application.
FIG. 16 is a schematic diagram of a structure of a positioning node according to an embodiment of this application.

### DESCRIPTION OF EMBODIMENTS

To make the objectives, technical solutions, and advantages of this application clearer, the following further describes this application with reference to the accompanying drawings. Apparently, the described embodiments are merely some but not all of the embodiments of this application. All other embodiments obtained by a person of ordinary skill in the art based on the embodiments of this application without creative efforts shall fall within the protection scope of this application.

The terms "first" and "second" are merely for the purpose of description, and shall not be understood as an indication or implication of relative importance or an implicit indication of a quantity of indicated technical features. Therefore, a feature defined by "first" or "second" may explicitly or implicitly include one or more features. In the description of this application, "a plurality of" means at least two unless otherwise stated.

In the description of this application, it should be noted that unless otherwise specified and defined explicitly, the term "connect" should be understood in a broad sense. For example, it may refer to a direct connection, an indirect connection via an intermediate medium, or internal communication between two components. A person of ordinary skills in the art can understand specific meanings of these terms in this application as appropriate to specific situations.

In a wireless local area network, to implement high-accuracy positioning, an AOA positioning algorithm is used. An antenna array is disposed in a positioning node. When an AOA measurement for positioning is performed, a signal is transmitted by a to-be-measured node and received by multiple antennas simultaneously, and the signal is a transmission packet. Because different antennas in the antenna array in the positioning node receive the signal at different distances, phase differences are generated. The positioning node calculates an angle of arrival of the signal based on these phase differences, and then calculates a location of the to-be-measured node.

In the related art, the positioning node measures the AOA by exchanging the transmission packet with the to-be-measured node, where the transmission packet carries an LTF. Based on training symbols in the LTF in the transmission packet, the phase differences may be calculated, and then the angle of arrival may be calculated.

However, in the foregoing mode, a quantity of antennas in the positioning node needs to be increased, and radio frequency transceiver channels also need to be increased to achieve the purpose of receiving the transmission packet simultaneously. Therefore, costs of this solution are high, and this solution is applicable only to a specific requirement. In addition, in this solution, only the LTF is used to calculate the angle of arrival, and there is a problem that a large error may occur in a single calculation, which affects measurement accuracy.

Embodiments of this application provide a wireless connection positioning method and apparatus, a node, and a storage medium. The method is applied to a positioning node and includes: receiving a transmission packet sent by a to-be-measured node, where the transmission packet includes a first indication, the first indication is used to indicate a target angle-of-arrival measurement, and the transmission packet further includes extended positioning information; and measuring an angle of arrival for the to-be-measured node based on the extended positioning information.

In the foregoing solution, the to-be-measured node uses the first indication to indicate whether it is a target angle-of-arrival measurement, to distinguish from a conventional positioning mode. If the transmission packet includes the first indication that represents the target angle-of-arrival measurement, the to-be-measured node places the extended positioning information in the transmission packet, that is, the extended positioning information (denoted as an mLTF for distinguishing from an existing LTF) is added on a basis of original positioning information (that is, an LTF). Based on the LTF and the mLTF, a plurality of angles of arrival may be calculated and then averaged, and angle-of-arrival positioning may be performed more accurately.

The technical solutions of this application and how the technical solutions of this application resolve related technical problems are hereinafter described in detail with reference to the accompanying drawings and specific embodiments. The specific embodiments below may be combined with each other, and same or similar concepts or processes may not be described again in some embodiments.

The technical solutions provided in this application may be applied to various communication systems, such as a wireless local area network (WLAN) system. For example, the solutions provided in the embodiments of this application may be applied to a wireless local area network system supporting the Institute of Electrical and Electronics Engineers (IEEE) 802.11 series protocols, for example, an 802.11 next-generation Wi-Fi protocol, such as 802.11bf, 802.11be, Wi-Fi 8, extremely high throughput (EHT), ultra high reliability (UHR), or Wi-Fi AI. The solutions may also be applied to a sensing system, an Internet of Things (IoT) system, or the like, and may also be applied to a 3rd Generation Partnership Project (3GPP)-related cellular system, for example, a 4th generation (4G) mobile communication system such as a long term evolution (LTE) system, a 5th generation (5G) mobile communication system such as a new radio (NR) system, or a future-oriented evolution system (for example, 6th Generation mobile communication system). Alternatively, the solutions may be applied to new communication systems emerging in future communication development or the like.

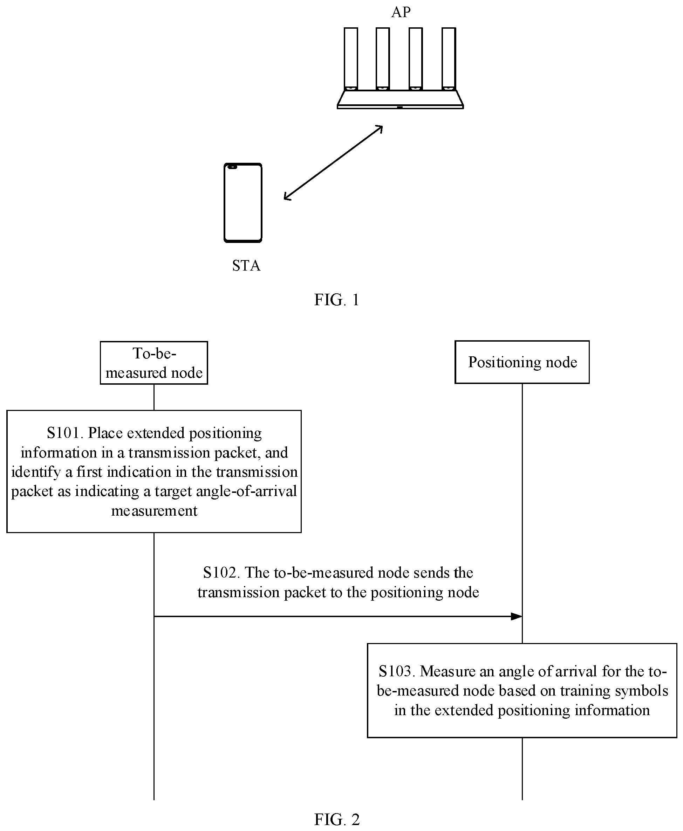

FIG. 1 is a schematic diagram of a communication system according to an embodiment of this application. The communication system includes at least one access point (AP), as shown in FIG. 1. In addition, the communication system 100 may further include at least one terminal. As shown in FIG. 1, the terminal may be a station (STA). In the communication system 100, a positioning node is an AP, and a to-be-measured node is a STA; or a positioning node is a STA, and a to-be-measured node is an AP. When the communication system 100 includes a plurality of STAs, both a positioning node and a to-be-measured node may be STAs. Moreover, an attribute of a device may be variable. For example, an AP may work as a positioning node to perform a process corresponding to the positioning node, and also work as a to-be-measured node to perform a process corresponding to the to-be-measured node. Logic of two nodes is mutually independent and does not affect each other. It should be understood that FIG. 1 is merely a schematic diagram of the communication system to which this embodiment of this application is applicable. The solutions provided in this application may also be applied to other communication systems, such as a cellular communication system. For example, the access point may be a radio access network (RAN) node in the cellular communication system, and the terminal may be a terminal in the cellular communication system. This is not limited thereto in this application.

FIG. 2 is an interaction flowchart of a wireless connection positioning method according to an embodiment of this application. As shown in FIG. 2, the method includes the following steps.

Step S101: A to-be-measured node places extended positioning information in a transmission packet, and identifies a first indication in the transmission packet as indicating a target angle-of-arrival measurement.

Because this embodiment of this application uses an AOA positioning mode different from a conventional positioning mode, based on this, the to-be-measured node uses the first indication to indicate whether the transmission packet is for a target angle-of-arrival measurement, thereby distinguishing from the conventional positioning mode. The first indication may be a field or a bit. This is not specifically limited to this embodiment. In other words, if the first indication indicates a target angle-of-arrival measurement, for example, if a value for the first indication is "1" for indicating a target angle-of-arrival measurement, the process of step S101 is performed. If the first indication indicates a non-target angle-of-arrival measurement, for example, if a value for the first indication is "0" for indicating a non-target angle-of-arrival measurement, the process of step S101 is not performed. Herein, the value of the first indication is merely an example, and the value and meaning of the first indication may be opposite to those in the foregoing example, or other values may be used.

In some optional implementations, the transmission packet not only carries an LTF, but also carries the extended positioning information, to perform more accurate AOA positioning. When the extended positioning information includes a plurality of pieces of sub-extended positioning information, a period corresponding to the sub-extended positioning information may be set in the transmission packet. In the period corresponding to the sub-extended positioning information, an antenna group corresponding to the sub-extended positioning information receives and processes the sub-extended positioning information, and completes antenna switching.

A specific duration of the period corresponding to the sub-extended positioning information is not limited to this embodiment of this application. For example, the duration may be a fixed duration, or may be determined through negotiation between a positioning node and the to-be-measured node.

In this embodiment of this application, positioning-related information (the extended positioning information, the first indication, and the like) may be sent separately, or may be sent together with service information. This is not specifically limited to this embodiment of this application. In other words, in some implementations, the transmission packet may also include the service information.

Step S102: The to-be-measured node sends the transmission packet to the positioning node.

In some implementations, the to-be-measured node sends the transmission packet carrying the first indication and the extended positioning information to the positioning node. In this way, after receiving the transmission packet, the positioning node can perform positioning based on the transmission packet.

Step S103: The positioning node measures an angle of arrival for the to-be-measured node based on the extended positioning information.

In the foregoing solution, the to-be-measured node uses the first indication to indicate whether it is a target angle-of-arrival measurement, to distinguish from the conventional positioning mode. In some implementations, based on a conventional measurement solution, an antenna array may not be switched when the angle of arrival AOA is being measured. If the transmission packet represents a target angle-of-arrival measurement, the to-be-measured node places the extended positioning information in the transmission packet, that is, the extended positioning information (denoted as an mLTF for distinguishing from an existing LTF) is added on a basis of original positioning information (that is, an LTF). Based on the LTF and the mLTF and through multiple measurements, angle-of-arrival positioning is performed more accurately. In some implementations, a measurement is performed based on the LTF and the mLTF, and in a measurement process, the antenna array is switched, and the angle of arrival is measured for the to-be-measured node by receiving one transmission packet. In this solution, the number of packet transmission times and noise in an angle-of-arrival measurement can be reduced. In some implementations, the angle of arrival is measured only based on the extended positioning information. In the measurement process, the antenna array is switched, and an angle-of-arrival measurement can be implemented on different antenna arrays by receiving one transmission packet. This reduces the number of packet transmission times and also reduces the noise in the angle-of-arrival measurement, and improves correlation of angle-of-arrival information. Moreover, in this solution, because a time interval of sub-extended positioning information in the extended positioning information is short, an error in the angle-of-arrival measurement is further reduced.

In the following implementations, a solution to an angle-of-arrival measurement based only on the extended positioning information is described as an example. An implementation of an angle-of-arrival measurement based on both the LTF and the extended positioning information is similar to an implementation of an angle-of-arrival measurement based only on the extended positioning information, and details are not described again.

In some optional implementations, the extended positioning information includes a plurality of pieces of sub-extended positioning information.

A plurality of pieces of sub-extended positioning information are configured in one transmission packet, and based on the sub-extended positioning information, multiple angle-of-arrival measurements are performed. In this way, impact of abrupt values is reduced by processing statistical data of a plurality of angles of arrival, and accuracy and reliability of angle-of-arrival positioning are further improved. In addition, when the plurality of pieces of sub-extended positioning information are received, switching between antenna groups may also be processed to implement angle-of-arrival positioning on multiple antennas by using one packet.

In some optional implementations, in a case that there are a plurality of pieces of sub-extended positioning information, the plurality of pieces of sub-extended positioning information include first sub-extended positioning information, and the antenna array in the positioning node includes a first antenna group. The antenna array includes several antennas for transmitting and receiving signals. The antenna array may be connected to an antenna controller, so that different antenna groups are generated through controlling of an antenna switch. An antenna group represents a combination of antennas that receive and process signals at a same time point. An antenna combination includes multiple antennas, and only one antenna group works at a same time point.

Step S103 may be implemented in the following manner: receiving training symbols in the first sub-extended positioning information by using the first antenna group; and measuring the angle of arrival for the to-be-measured node based on the training symbols in the first sub-extended positioning information.

It may be understood that the antenna group receives the training symbols in the extended positioning information, and then parses the training symbols by using a processor connected to the antennas. Details are not described again in subsequent steps.

In some optional implementations, the plurality of pieces of sub-extended positioning information include first sub-extended positioning information and second sub-extended positioning information, and the antenna array in the positioning node includes a first antenna group and a second antenna group.

Step S103 may be implemented in the following manner: receiving training symbols in the first sub-extended positioning information by using the first antenna group; receiving training symbols in the second sub-extended positioning information by using the second antenna group; and measuring the angle of arrival for the to-be-measured node based on the training symbols in the first sub-extended positioning information and the training symbols in the second sub-extended positioning information.

The first antenna group and the second antenna group are not limited to this embodiment of this application. In some optional implementations, the first antenna group is the same as the second antenna group, so that the same antenna group may receive the plurality of pieces of sub-extended positioning information to integrate more information, thereby further improving accuracy of angle-of-arrival positioning.

In some optional implementations, the first antenna group is different from the second antenna group. In a Wi-Fi transmission solution, to perform an AOA measurement with higher accuracy and a wider range, more antennas need to be disposed on an AP. In this case, the first antenna group may be different from the second antenna group, so that a measurement range is increased.

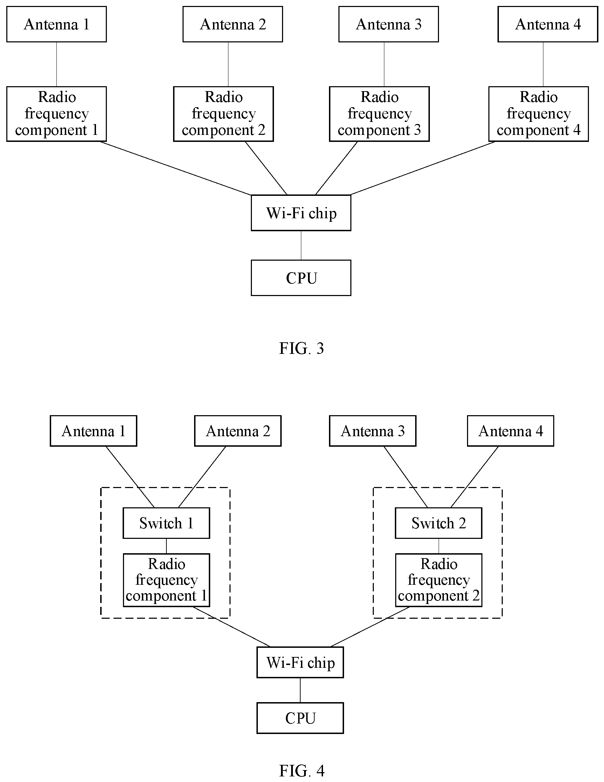

As shown in FIG. 3, in the related art, a plurality of groups of radio frequency components and antennas are disposed in a positioning node. The plurality of groups of radio frequency components and antennas decode received signals simultaneously to obtain more wireless transmission information, and then AOA calculation for positioning is performed.

In the foregoing mode, a quantity of radio frequency components in the positioning node needs to be increased, which makes great changes to the positioning node, resulting in high costs.

As shown in FIG. 4, in the related art, a quantity of radio frequency components in a positioning node is unchanged, and a same radio frequency component corresponds to multiple antennas. When it is necessary to communicate with a to-be-measured node for a plurality of times, an antenna configuration is changed by using a switch array, to connect the radio frequency component to more antennas. Wireless transmission information of different antennas is obtained by switching to different antennas in time division mode (that is, connecting the radio frequency component to different antennas at different time points), and a plurality of pieces of transmission information are integrated, to perform more accurate AOA positioning. FIG. 4 is used as an example. When a packet sent by the to-be-measured node is received for the first time, a receive antenna group is antenna group 1, which includes antenna 1 and antenna 3. When a packet sent by the to-be-measured node is received for the second time, a receive antenna group is antenna group 2, which includes antenna 2 and antenna 4.

In the foregoing implementation, the positioning node needs to obtain wireless transmission information in time division mode, which causes more additional packet exchange and occupies more air interface overheads. The implementation not only occupies more network resources and affects communication performance, but also requires a long positioning time because a plurality of pieces of wireless transmission information need to be obtained in time division mode.

In the foregoing implementation, the positioning node including two antenna groups is used as an example. If more antenna groups are disposed, problems of resource occupation and time consumption may be severer.

In addition, in the foregoing implementation antenna groups are switched to receive different packets. If the positioning-related information and the service information are combined for sending, the antenna array may probably not be in an optimal configuration state, and communication performance is affected.

In this embodiment of this application, by switching between antenna groups in the period of one transmission packet, switching between multiple antenna groups and reception of training symbols are implemented. Compared with the solution to increasing both radio frequency components and antennas, this implementation is applicable to a case that there are only a few radio frequency components. In addition, compared with the solution to sending a plurality of packets in time division mode, this implementation may not cause more additional packet exchange, but reduces air interface overheads and reduces occupation of network resources, thereby improving communication performance and reducing the time required for angle-of-arrival positioning. In addition, single-packet transmission is used in this embodiment of this application. Compared with the solution to sending a plurality of packets in time division mode, a transmission environment is consistent, and periods corresponding to the sub-extended positioning information are very close in time, which reduces impact of environmental factors caused by a large transmission time interval. Therefore, received noise interference is far weaker than that in multi-packet transmission, and measurement accuracy is further improved.

In some optional implementations, the first sub-extended positioning information corresponds to a first period, and the first period includes durations corresponding to a plurality of LTFs. The second sub-extended positioning information corresponds to a second period, and a duration of the first period is the same as or different from a duration of the second period. In the period corresponding to the sub-extended positioning information, an antenna group corresponding to the sub-extended positioning information receives and processes the sub-extended positioning information, and completes antenna switching.

When the positioning node receives the extended positioning information, the positioning node normally receives, in periods corresponding to the extended positioning information, the training symbols in the sub-extended positioning information by using antennas in the corresponding antenna group. When antenna groups receiving sub-extended positioning information are different, the positioning node further needs to complete antenna group switching in periods corresponding to two adjacent pieces of sub-extended positioning information.

However, a duration corresponding to a conventional LTF is fixed (refer to the specification in 802.11), and the duration corresponding to the LTF is the time reserved for reception by an antenna and parsing by a processor (excluding switching).

Therefore, in some embodiments, a period corresponding to one piece of sub-extended positioning information includes durations corresponding to a plurality of LTFs.

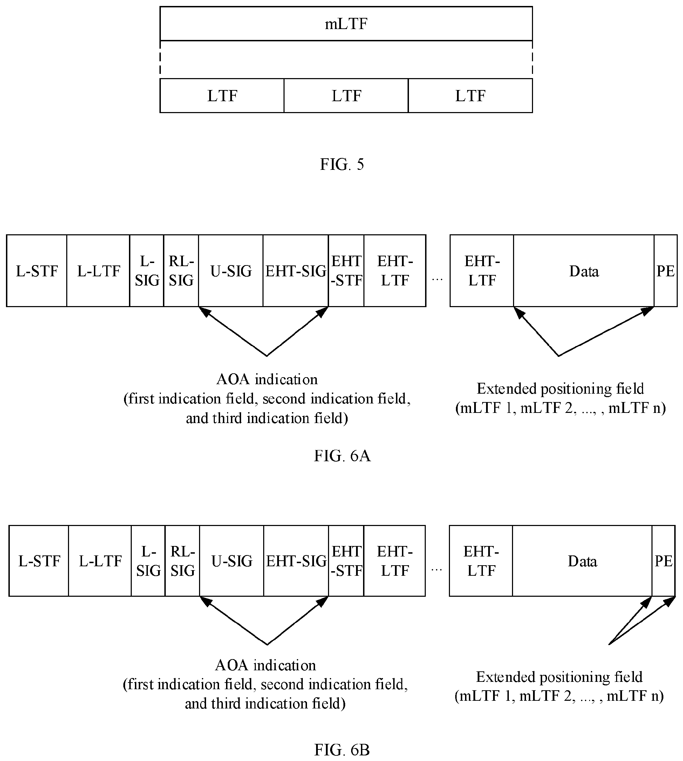

As shown in FIG. 5, the period corresponding to the sub-extended positioning information (mLTF) includes durations corresponding to three LTFs.

FIG. 5 is merely illustrative. A specific correspondence between the period corresponding to the extended positioning information and the duration corresponding to the LTF is not limited to this embodiment of this application. For example, the period corresponding to the extended positioning information and the duration corresponding to the LTF may be determined through negotiation between the positioning node and the to-be-measured node.

In addition, if there are a plurality of pieces of sub-extended positioning information, periods corresponding to different sub-extended positioning information may be the same or different. The periods corresponding to different sub-extended positioning information may be set based on an actual requirement, or determined through negotiation between the positioning node and the to-be-measured node. This is not specifically limited to this embodiment.

In the foregoing solution, a period corresponding to one piece of sub-extended positioning information includes durations corresponding to a plurality of LTFs. Therefore, it is ensured that training symbols in the sub-extended positioning information can be normally received by antennas in a corresponding antenna group and that the antenna array is switched.

In some optional implementations, the placing the extended positioning information in the transmission packet in step S101 may be implemented, without limitation, in the following manner:
placing the extended positioning information in a free bit of a data field of the transmission packet or in a PE field; or placing the extended positioning information in an extended positioning field of the transmission packet, where the extended positioning field is a new field between the data field and the PE field.

For example, the transmission packet used in this embodiment may be improved based on a presentation protocol data unit (PPDU) in 802.11be.

The transmission packet includes a legacy short training field (L-STF), a legacy long training field (L-LTF), a legacy signal field (L-SIG), a repeated legacy signal field (RL-SIG), a universal signal field (U-SIG), an extremely high throughput signal field (EHT-SIG), an extremely high throughput short training field (EHT-STF), an extremely high throughput long training field (EHT-LTF), a data field, and a PE field.

In some implementations, free bits in the U-SIG or the EHT-SIG are used as AOA-related indication fields. In some other implementations, specific bits in the U-SIG or the EHT-SIG are reused as AOA-related indication fields. Herein, the AOA-related indication fields may include the first indication, a second indication, a third indication, and the like. For these indications, refer to other embodiments, details are not described herein.

As shown in FIG. 6A, in some implementations, the extended positioning information is in the free bit of the data field of the transmission packet.

As shown in FIG. 6B, in some other implementations, the extended positioning information is in the PE field.

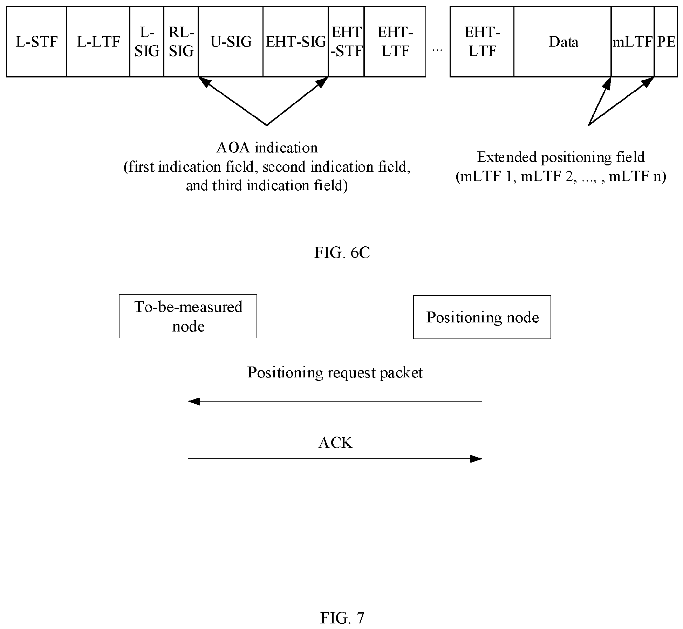

As shown in FIG. 6C, in still some other implementations, an extended positioning field (mLTF field) is added to the transmission packet, and the extended positioning information is in the mLTF field.

In FIG. 6A to FIG. 6C, mLTF 1, mLTF 2, ..., mLTF n are used as examples, where n is a quantity of the plurality of pieces of sub-extended positioning information. A specific value of n is not limited to this embodiment of this application. For example, it is at least two or at least three.

FIG. 6A to FIG. 6C are merely illustrative. The packets in this embodiment of this application may further include Wi-Fi packets of other new versions, such as 802.11bf packets, or may be Wi-Fi packets of new versions. This is not specifically limited to this embodiment of this application.

In the foregoing solution, the existing packet is improved by placing the extended positioning information in the free bit of the data field or in the PE field. Therefore, an improved packet can be compatible with the existing packet. In the foregoing implementation, switching between multiple antenna groups is completed based on the existing packet, and positioning is performed by using the multiple antenna groups. Alternatively, the to-be-measured node is positioned by integrating information of a same antenna group.

In some optional implementations, S101 further includes the following step: The to-be-measured node places the second indication in the transmission packet, where the second indication is used to indicate that the transmission packet represents a response. In some implementations, that the second indication is used to indicate that the transmission packet represents the response specifically means that the second indication is used to indicate that the transmission packet includes information representing the response.

In an implementation, the positioning node and the to-be-measured node may use different measurement modes for AOA positioning.

In some implementations, the positioning node and the to-be-measured node use a measurement-on-request mode. As shown in FIG. 7, the positioning node sends a positioning request packet to the to-be-measured node. The to-be-measured node responds based on the sent positioning request, such as sending an acknowledgement (ACK) character.

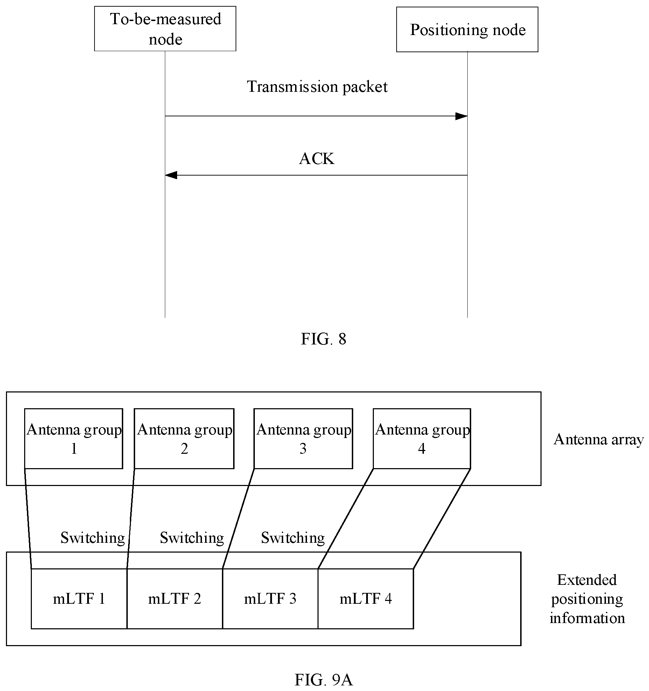

In some implementations, the positioning node and the to-be-measured node use a real-time measurement mode. As shown in FIG. 8, the to-be-measured node sends the foregoing transmission packet to the positioning node in real time, to implement tracking and other processes. The positioning node responds based on the sent positioning request, such as sending anACK.

For the measurement-on-request mode, the positioning request packet is in an existing positioning request packet form. After sending the ACK packet, the to-be-measured node sends the positioning-related information.

Based on this, the to-be-measured node places, in the transmission packet, the second indication indicating that the transmission packet represents the response, so that measurement information and response information are sent simultaneously, and that a quantity of transmitted packets is reduced.

In some optional implementations, the first antenna group is different from the second antenna group, the first sub-extended positioning information is adjacent to the second sub-extended positioning information, and the second sub-extended positioning information follows the first sub-extended positioning information. The first sub-extended positioning information corresponds to the first period, and the second sub-extended positioning information corresponds to the second period. Before step S103, the following step is also performed. Switching the antenna array in the positioning node to the second antenna group at a first switching time point, where the first switching time point is a starting time point of the second period, or the first switching time point is a time point that is in the first period and that is at least a first preset duration away from a starting time point of the first period.

When different antenna groups receive different sub-extended information, the positioning node needs to normally receive, in a period corresponding to one piece of sub-extended positioning information, training symbols in the sub-extended positioning information by using antennas in an antenna group corresponding to the sub-extended positioning information, and further needs to complete antenna array switching in periods corresponding to two adjacent pieces of sub-extended positioning information. In the foregoing process, the receiving process and the switching process cannot be performed simultaneously. The positioning node may switch to an antenna group corresponding to a next piece of sub-extended positioning information after parsing. Alternatively, in a period corresponding to a previous piece of sub-extended positioning information, the positioning node may switch to an antenna group corresponding to a next piece of sub-extended positioning information before parsing. In this case, the first period is divided into two parts: a receiving time segment and a switching time segment.

In some implementations, the positioning node performs switching at the starting time point of the second period.

Based on this, in this embodiment of this application, the positioning node determines the first switching time point in the period corresponding to the sub-extended positioning information, where the first switching time point is used to indicate a time point at which the switching is started. The receiving time segment precedes the first switching time point, and in the receiving time segment, the positioning node parses sub-extended positioning information received this time. The switching time segment follows the first switching time point, and in the switching time segment, the positioning node switches to the antenna group corresponding to the next piece of sub-extended positioning information.

For example, n pieces of sub-extended positioning information and n antenna groups correspondingly switched to collect the information are used as examples for description. Before a first switching time point of an (i-1)^{th} piece of sub-extended positioning information, an antenna group (that is, antenna group i-1) corresponding to the (i-1)^{th} piece of sub-extended positioning information receives and parses the (i-1)^{th} piece of sub-extended positioning information. After the first switching time point, the positioning node controls the antenna array to be switched from the antenna group corresponding to the (i-1)^{th} piece of sub-extended positioning information to an antenna group (that is, antenna group i) corresponding to an i^{th} piece of sub-extended positioning information, where 2≤i≤n, and i is an integer. A specific value of n is not limited to this embodiment, for example, it is at least two or at least three.

A specific manner of determining the first switching time point in the first period is not limited to this embodiment of this application. For example, a ratio of the receiving time segment to the switching time segment is set with reference to parsing efficiency and switching efficiency of the positioning node, and the first switching time point in the first period is determined based on the ratio. Alternatively, the receiving time segment is set to a fixed duration (such as the first preset duration), and the first switching time point is determined based on a starting time point of the period corresponding to the positioning information.

No matter which manner is used to determine the first switching time point, it is necessary to ensure that the time between the first switching time point of the sub-extended positioning information and the starting time point of the corresponding period is longer than or equal to the time required for receiving and parsing the sub-extended positioning information, and reserve a certain time for the first antenna group to receive and parse the sub-extended positioning information.

A sequence of the antenna groups is not specifically limited to this embodiment of this application. The sequence of the antenna groups may be set by the positioning node. For example, the first antenna group is an optimal receive antenna group, and other antenna groups are auxiliary receive antennas. For different to-be-measured nodes, optimal receive antennas are different. In some implementations, the positioning node takes a receive antenna group used to receive a previous packet as an optimal receive antenna group. In this case, when a first piece of sub-extended positioning information is received, antenna switching will not be required, thereby reducing the number of switching times.

In some implementations, a quantity of sub-extended positioning information is the same as a total quantity of antenna groups in the antenna array. In this case, each antenna group obtains one piece of sub-extended positioning information, and the to-be-measured node may be located with reference to information obtained by multiple antenna groups.

In some implementations, the quantity of sub-extended positioning information is different from the total quantity of antenna groups in the antenna array. The quantity of sub-extended positioning information may be larger than the total quantity of antenna groups in the antenna array, or the quantity of sub-extended positioning information may be smaller than the quantity of antenna groups in the antenna array. When the quantity of sub-extended positioning information is larger or smaller than the total quantity of antenna groups in the antenna array, the positioning node further needs to determine how the extended positioning information corresponds to the antenna groups. The following uses three specific examples for description.

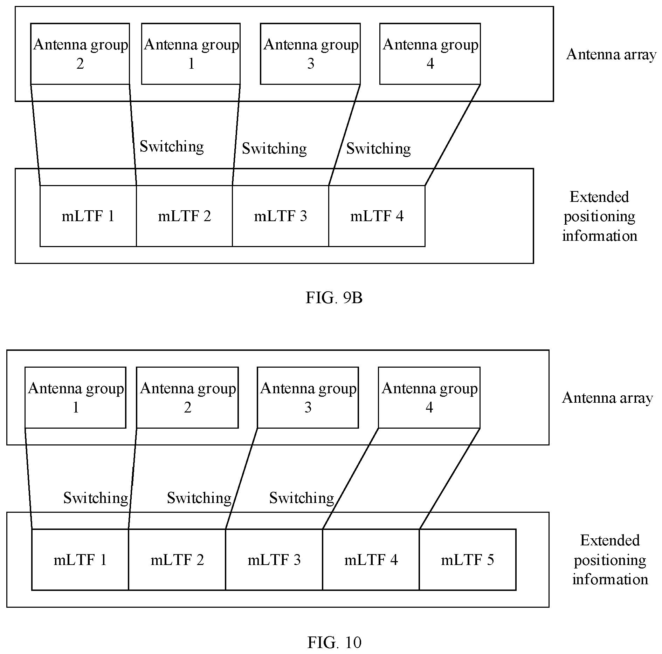

Using FIG. 9A and FIG. 9B as examples, the quantity of sub-extended positioning information may be the same as the total quantity of antenna groups in the antenna array. In this case, the sub-extended positioning information is in a one-to-one correspondence with the antenna groups.

As shown in FIG. 9A, before a first switching time point of mLTF 1, the positioning node receives mLTF 1 by using antennas in antenna group 1 (antenna group 1 is an optimal antenna group), switches the antenna group after the first switching time point of mLTF 1 and completes the switching before a period corresponding to mLTF 2, thereby switching the antenna group from antenna group 1 to antenna group 2.

Before a first switching time point of mLTF 2, the positioning node receives mLTF 2 by using antennas in antenna group 2, switches the antenna group after the first switching time point of mLTF 2 and completes the switching before a period corresponding to mLTF 3, thereby switching the antenna group from antenna group 2 to antenna group 3.

Before a first switching time point of mLTF 3, the positioning node receives mLTF 3 by using antennas in antenna group 3, switches the antenna group after the first switching time point of mLTF 3 and completes the switching before a period corresponding to mLTF 4, thereby switching the antenna group from antenna group 3 to antenna group 4.

In the period corresponding to mLTF 4, the positioning node receives mLTF 4 by using antennas in antenna group 4, and no switching is required in the period corresponding to mLTF 4.

In some implementations, the period corresponding to mLTF 4 is the same as the periods corresponding to mLTF 1, mLTF 2, and mLTF 3, and using the same period can reduce load of the positioning node.

In some implementations, the period corresponding to mLTF 4 is shorter than the periods corresponding to mLTF 1, mLTF 2, and mLTF3. In this case, the packet receiving time can be reduced, and efficiency can be improved.

As shown in FIG. 9B, in the period corresponding to mLTF 1, reception is performed by using antennas in antenna group 2 (antenna group 2 is an optimal antenna group).

At the switching time point of mLTF 2 (which may be a starting time point of mLTF 2), the positioning node switches the antenna group from antenna group 2 to antenna group 1, and after the switching is completed, receives and parses mLTF 2 by using antennas in antenna group 1.

At the first switching time point of mLTF 3 (which may be a starting time point of mLTF 3), the positioning node switches the antenna group from antenna group 1 to antenna group 3, and after the switching is completed, receives and parses mLTF 3 by using antennas in antenna group 3.

At the first switching time point of mLTF 4 (which may be a starting time point of mLTF 4), the positioning node switches the antenna group from antenna group 3 to antenna group 4, and after the switching is completed, receives and parses mLTF 4 by using antennas in antenna group 4.

As shown in FIG. 10, the quantity of sub-extended positioning information is larger than the total quantity of antenna groups in the antenna array. In this case, some sub-extended positioning information has no corresponding antenna group. For example, the quantity of sub-extended positioning information is five, but the total quantity of antenna groups is four. In this case, there are antenna groups corresponding to the first four pieces of sub-extended positioning information, but there is no antenna group corresponding to the fifth piece of sub-extended positioning information.

In the packet receiving process, before the first switching time point of mLTF 1, the positioning node receives mLTF 1 by using antennas in antenna group 1, switches the antenna group after the first switching time point of mLTF 1 and completes the switching before the period corresponding to mLTF 2, thereby switching the antenna group from antenna group 1 to antenna group 2.

Before the first switching time point of mLTF 2, the positioning node receives mLTF 2 by using antennas in antenna group 2, switches the antenna group after the first switching time point of mLTF 2, and completes the switching before the period corresponding to mLTF 3, thereby switching the antenna group from antenna group 2 to antenna group 3.

Before the first switching time point of mLTF 3, the positioning node receives mLTF 3 by using antennas in antenna group 3, switches the antenna group after the first switching time point of mLTF 3 and completes the switching before the period corresponding to mLTF 4, thereby switching the antenna group from antenna group 3 to antenna group 4.

In the period corresponding to mLTF 4, mLTF 4 is received by using antennas in antenna group 4. Because there are no other antenna groups in the antenna array, no switching is required in the period corresponding to mLTF 4.

In a period corresponding to mLTF 5, reception is continued by using antennas in antenna group 4.

In the last example above, in the period corresponding to mLTF 5, any antenna group such as antenna group 1, 2, or 3 may also be reused for reception. An antenna group corresponding to each mLTF may be determined in advance by the positioning node.

The foregoing correspondences are merely illustrative. In an implementation, a switching sequence of the antenna groups may use another manner. The positioning node and the to-be-measured node may determine the quantity of sub-extended positioning information through negotiation, and set more or less sub-extended positioning information. The positioning node may also use more or fewer antenna groups for positioning. When the quantity of sub-extended positioning information is larger than the total quantity of antenna groups in the antenna array, other correspondences may also be used. For example, mLTF 1 and mLTF 2 correspond to antenna group 1, mLTF 3 corresponds to antenna group 2, mLTF 4 corresponds to antenna group 3, and mLTF 5 corresponds to antenna group 4. Alternatively, mLTF 1 corresponds to antenna group 1, mLTF 2 and mLTF 3 correspond to antenna group 2, mLTF 4 corresponds to antenna group 3, and mLTF 5 corresponds to antenna group 4. The correspondences may be set with reference to specific scenarios.

In the foregoing solution, the positioning node normally receives the training symbols in the sub-extended positioning information by using the antennas in the corresponding antenna group in the period corresponding to the sub-extended positioning information, and completes antenna array switching between periods corresponding to two adjacent pieces of sub-extended positioning information, to switch to the antenna group corresponding to the next piece of sub-extended positioning information. The receiving process and the switching process cannot be performed simultaneously. By determining the first switching time point of the sub-extended positioning information, the positioning node divides the period corresponding to the sub-extended positioning information into two parts: the receiving time segment and the switching time segment. This ensures that the receiving process and the switching process are performed smoothly and do not interfere with each other.

In some optional implementations, step S103 may be implemented, without limitation, in the following manner:
for any target antenna, determining wireless transmission information of the target antenna based on a parsing result of a training symbol corresponding to the target antenna; and performing angle-of-arrival positioning for the to-be-measured node based on the wireless transmission information of the target antenna. The target antenna is an antenna used to receive and parse a signal at a certain time. For example, in the period corresponding to the first sub-extended positioning information, the first sub-extended positioning information corresponds to the first antenna group, and the target antenna is an antenna in the first antenna group and is used to receive and parse the first sub-extended positioning information.

For example, a parsing result of a training symbol corresponding to an antenna (obtained by a corresponding processor through parsing) is determined, and wireless transmission information of the antenna is determined by comparing the training symbol with the parsing result. Wireless transmission information and antenna position information of all the antennas in the antenna array are integrated for AOA calculation, and angle-of-arrival positioning is performed for the to-be-measured node.

In the foregoing solution, angle-of-arrival positioning is accurately performed for the to-be-measured node by integrating the wireless transmission information of all the antennas in the antenna array.

In some optional implementations, the transmission packet includes a target quantity of sub-extended positioning information, where the target quantity is a preset quantity or is determined through negotiation between the positioning node and the to-be-measured node.

For example, the target quantity may be a preset quantity, where the preset quantity is a minimum quantity that can be used for an angle-of-arrival measurement for positioning, or any quantity larger than the minimum quantity, or a preset quantity determined when the third indication is default. In some other implementations, the target quantity may also be determined through negotiation between the positioning node and the to-be-measured node.

In this embodiment of this application, the preset quantity of sub-extended positioning information is set, or the quantity of sub-extended positioning information is negotiated between the positioning node and the to-be-measured node, so that different quantities of sub-extended positioning information are configured in different scenarios.

In some optional implementations, S101 further includes the following step:
placing the third indication in the transmission packet, where the third indication is used to indicate the target quantity.

In this embodiment, the transmission packet includes the target quantity of sub-extended positioning information. The to-be-measured node may add, to the transmission packet, the third indication used to indicate the quantity of the sub-extended positioning information.

In some optional implementations, the target quantity is the total quantity of antenna groups in the antenna array. When the target quantity is equal to the total quantity of antenna groups in the antenna array of the positioning node, each antenna group in the positioning node measures corresponding sub-extended positioning information, so that accuracy of the AOA measurement for positioning can be improved.

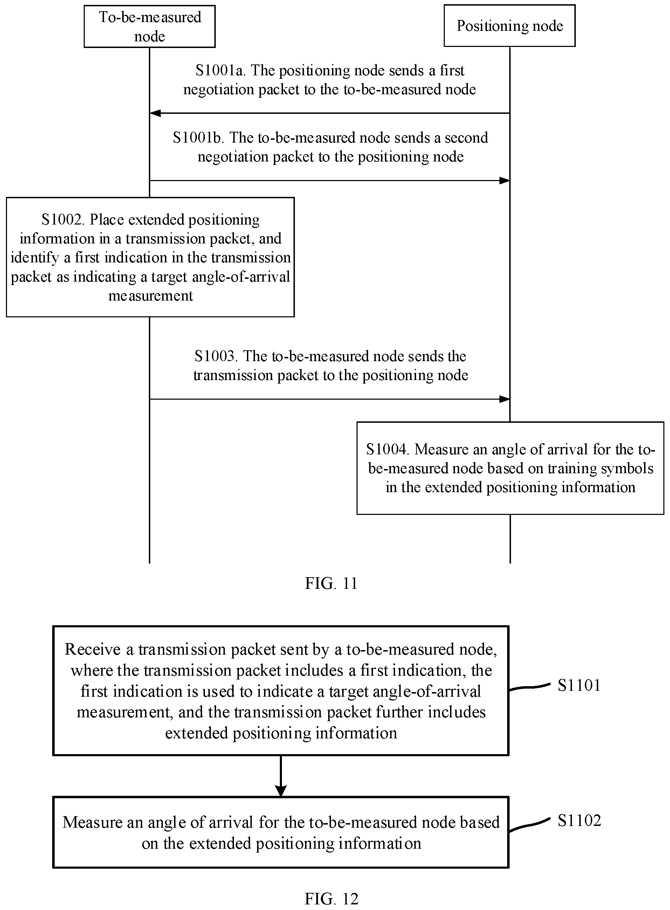

FIG. 11 is an interaction flowchart of a second wireless connection positioning method according to an embodiment of this application. As shown in FIG. 11, the method includes the following steps.

Step S1001a: A positioning node sends a first negotiation packet to a to-be-measured node, where the first negotiation packet includes at least one of information representing support for a target angle-of-arrival measurement, a quantity of sub-extended positioning information, and a period corresponding to the sub-extended positioning information.

Step S1001b: The to-be-measured node sends a second negotiation packet to the positioning node, where the second negotiation packet corresponds to the first negotiation packet.

To better support AOA positioning based on the extended positioning information, details of measurement for positioning need to be negotiated before positioning is performed. As mentioned above, content negotiated between the positioning node and the to-be-measured node may include the quantity of sub-extended positioning information and a specific value of the period corresponding to the extended positioning information.

For example, the positioning node sends the first negotiation packet to the to-be-measured node, where the first negotiation packet carries the information representing the support for the target angle-of-arrival measurement, the quantity of sub-extended positioning information, and the period corresponding to the extended positioning information. Based on the information representing the support for the target angle-of-arrival measurement, the to-be-measured node can know that the positioning node is capable of performing AOA positioning based on the extended positioning information, so that a process corresponding to the to-be-measured node is performed in this embodiment. In addition, the to-be-measured node configures the foregoing transmission packet based on the quantity of sub-extended positioning information and the period corresponding to the extended positioning information.

The to-be-measured node sends the second negotiation packet to the positioning node, where the second negotiation packet carries information representing support for a target angle-of-arrival measurement. Based on the information representing the support for the target angle-of-arrival measurement, the positioning node can know that the to-be-measured node is capable of performing AOA positioning based on the extended positioning information, so that a process corresponding to the positioning node is performed in this embodiment.

For example, the negotiation packet is a beacon packet or a probe packet. In some implementations, the positioning node and the to-be-measured node may use a beacon packet or a probe packet to carry the information representing the support for the target angle-of-arrival measurement (AOA capability description field), the quantity of sub-extended positioning information (AOA expected configuration field), and the period corresponding to the extended positioning information (AOA expected configuration field). For example, a STA sends a probe packet to an AP, and the AP sends a probe packet or a beacon packet to the STA for negotiation. Moreover, in the beacon packet, in addition to the AOA-related fields mentioned above, there is also a beacon configuration field; and in the probe packet, in addition to the AOA-related fields mentioned above, there is also a probe configuration field.

In some implementations, the foregoing negotiation process is performed in an access phase. For example, S1001a and S1001b are performed in a process in which the STA accesses the AP.

That the second negotiation packet corresponds to the first negotiation packet means that the first negotiation packet and the second negotiation packet are negotiation packets for an angle-of-arrival positioning event. The first negotiation packet may be a reply to the second negotiation packet, or the second negotiation packet is a reply to the first negotiation packet, or the two entities send negotiation packets to each other and send reply packets additionally. Therefore, a sequence of S1001a and S1001b is not specifically limited to this embodiment of this application, that is, S1001a or S1001b may be performed first, or S1001a and S1001b may be performed simultaneously.

Step S1002: The to-be-measured node places extended positioning information in a transmission packet, and identifies a first indication in the transmission packet to indicate a target angle-of-arrival measurement.

Step S1003: The to-be-measured node sends the transmission packet to the positioning node.

Step S1004: The positioning node measures an angle of arrival for the to-be-measured node based on training symbols in the extended positioning information.

For specific implementations of steps S1002 to S1004, refer to the foregoing embodiment. Details are not described herein again.

In the foregoing solution, before positioning, the positioning node exchanges the negotiation packets with the to-be-measured node, to set parameters based on a specific situation and better support AOA positioning based on the extended positioning information.

As shown in FIG. 12, a wireless connection positioning method performed by a positioning node in an embodiment of this application includes the following steps.

Step S1101: Receive a transmission packet sent by a to-be-measured node, where the transmission packet includes a first indication, the first indication is used to indicate a target angle-of-arrival measurement, and the transmission packet further includes extended positioning information.

Step S1102: Measure an angle of arrival for the to-be-measured node based on the extended positioning information. The measuring the angle of arrival for the to-be-measured node based on the extended positioning information includes: measuring the angle of arrival for the to-be-measured node based on training symbols in the extended positioning information.

In some optional implementations, the extended positioning information includes a plurality of pieces of sub-extended positioning information.

In some optional implementations, the plurality of pieces of sub-extended positioning information include first sub-extended positioning information, and an antenna array in the positioning node includes a first antenna group. The measuring the angle of arrival for the to-be-measured node based on the training symbols in the extended positioning information includes: receiving training symbols in the first sub-extended positioning information by using the first antenna group; and measuring the angle of arrival for the to-be-measured node based on the training symbols in the first sub-extended positioning information.

In some optional implementations, the plurality of pieces of sub-extended positioning information further include second sub-extended positioning information, and the antenna array in the positioning node further includes a second antenna group. The method further includes: receiving training symbols in the second sub-extended positioning information by using the second antenna group. The measuring the angle of arrival for the to-be-measured node based on the training symbols in the first sub-extended positioning information includes: measuring the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of LTFs, the second sub-extended positioning information corresponds to a second period, and a duration of the first period is the same as or different from a duration of the second period.

In some optional implementations, the first sub-extended positioning information is adjacent to the second sub-extended positioning information, and the second sub-extended positioning information follows the first sub-extended positioning information. The first sub-extended positioning information corresponds to a first period, and the second sub-extended positioning information corresponds to a second period. Before the receiving the training symbols in the second sub-extended positioning information by using the second antenna group, the method further includes: switching the antenna array in the positioning node to the second antenna group at a first switching time point, where the first switching time point is a starting time point of the second period, or the first switching time point is a time point that is in the first period and that is at least a first preset duration away from a starting time point of the first period. Within the first preset duration, the first antenna group corresponding to the first sub-extended positioning information completes signal reception and decoding.

In some optional implementations, the extended positioning information is in a free bit of a data field of the transmission packet or in a packet extension field of the transmission packet; or the extended positioning information is in an extended positioning field of the transmission packet, where the extended positioning field is a new field between the data field and the packet extension field.

In some optional implementations, the transmission packet further includes a second indication, where the second indication is used to indicate that the transmission packet represents a response.

In some optional implementations, the transmission packet includes a target quantity of sub-extended positioning information, where the target quantity is a preset quantity or is determined through negotiation between the positioning node and the to-be-measured node.

In some optional implementations, the transmission packet includes a third indication, where the third indication is used to indicate the target quantity.

In some optional implementations, the target quantity is a total quantity of antenna groups in the antenna array.

In some optional implementations, before the receiving the transmission packet sent by the to-be-measured node, the method further includes: sending a first negotiation packet to the to-be-measured node, where the first negotiation packet includes at least one of information representing support for a target angle-of-arrival measurement, a quantity of sub-extended positioning information, and a period corresponding to the extended positioning information; and receiving a second negotiation packet sent by the to-be-measured node, where the second negotiation packet corresponds to the first negotiation packet.

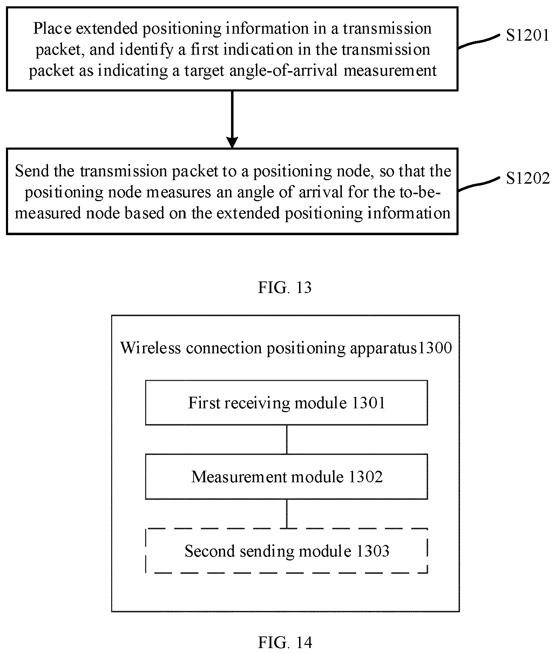

As shown in FIG. 13, a wireless connection positioning method performed by a to-be-measured node in an embodiment of this application includes the following steps.

Step S1201: Place extended positioning information in a transmission packet, and identify a first indication in the transmission packet to indicate a target angle-of-arrival measurement.

Step S1202: Send the transmission packet to a positioning node, so that the positioning node measures an angle of arrival for the to-be-measured node based on the extended positioning information.

In some optional implementations, the extended positioning information includes a plurality of pieces of sub-extended positioning information.

In some optional implementations, the plurality of pieces of sub-extended positioning information include first sub-extended positioning information, so that the positioning node receives training symbols in the first sub-extended positioning information by using a first antenna group in an antenna array and measures the angle of arrival for the to-be-measured node based on the training symbols in the first sub-extended positioning information.

In some optional implementations, the plurality of pieces of sub-extended positioning information further include second sub-extended positioning information, so that the positioning node receives training symbols in the second sub-extended positioning information by using a second antenna group in the antenna array and measures the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of LTFs, the second sub-extended positioning information corresponds to a second period, and a duration of the first period is the same as or different from a duration of the second period.

In some optional implementations, the first sub-extended positioning information is adjacent to the second sub-extended positioning information, the second sub-extended positioning information follows the first sub-extended positioning information, the first sub-extended positioning information corresponds to a first period, and the second sub-extended positioning information corresponds to a second period, so that before receiving the training symbols in the second sub-extended positioning information by using the second antenna group, the positioning node switches the antenna array in the positioning node to the second antenna group at a first switching time point, where the first switching time point is a starting time point of the second period, or the first switching time point is a time point that is in the first period and that is at least a first preset duration away from a starting time point of the first period.

In some optional implementations, the placing the extended positioning information in the transmission packet includes: placing the extended positioning information in a free bit of a data field of the transmission packet or in a packet extension field of the transmission packet; or placing the extended positioning information in an extended positioning field of the transmission packet, where the extended positioning field is a new field between the data field and the packet extension field.

In some optional implementations, the placing the extended positioning information in the transmission packet further includes: placing a second indication in the transmission packet, where the second indication is used to indicate that the transmission packet represents a response.

In some optional implementations, the placing the extended positioning information in the transmission packet includes: placing a target quantity of sub-extended positioning information in the transmission packet, where the target quantity is a preset quantity or is determined through negotiation between the positioning node and the to-be-measured node.

In some optional implementations, the placing the extended positioning information in the transmission packet further includes: placing a third indication in the transmission packet, where the third indication is used to indicate the target quantity.

In some optional implementations, the target quantity is a total quantity of antenna groups in the antenna array.

In some optional implementations, before the placing the extended positioning information in the transmission packet, the method further includes:
receiving a first negotiation packet sent by the positioning node, where the first negotiation packet includes at least one of information representing support for a target angle-of-arrival measurement, a quantity of sub-extended positioning information, and a period corresponding to the extended positioning information; and sending a second negotiation packet to the positioning node, where the second negotiation packet corresponds to the first negotiation packet.

For specific implementations of the embodiments in FIG. 12 and FIG. 13, refer to the implementations of the foregoing interaction methods. Repeated parts are not described again.

As shown in FIG. 14, based on the same inventive concept as the wireless connection positioning method shown in FIG. 12, an embodiment of this application provides a first wireless connection positioning apparatus 1300, which is applied to a positioning node. The apparatus includes:
a first receiving module 1301, configured to receive a transmission packet sent by a to-be-measured node, where the transmission packet includes a first indication, the first indication is used to indicate a target angle-of-arrival measurement, and the transmission packet further includes extended positioning information; and a measurement module 1302, configured to measure an angle of arrival for the to-be-measured node based on training symbols in the extended positioning information.

In some optional implementations, the extended positioning information includes a plurality of pieces of sub-extended positioning information.

In some optional implementations, the plurality of pieces of sub-extended positioning information include first sub-extended positioning information, an antenna array in the positioning node includes a first antenna group, and the measurement module 1302 is specifically configured to:
receive training symbols in the first sub-extended positioning information by using the first antenna group; and measure the angle of arrival for the to-be-measured node based on the training symbols in the first sub-extended positioning information.

In some optional implementations, the plurality of pieces of sub-extended positioning information further include second sub-extended positioning information, and the antenna array in the positioning node further includes a second antenna group. The measurement module 1302 is further configured to receive training symbols in the second sub-extended positioning information by using the second antenna group, and the measurement module 1302 is specifically configured to measure the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of LTFs, the second sub-extended positioning information corresponds to a second period, and a duration of the first period is the same as or different from a duration of the second period.

In some optional implementations, the first sub-extended positioning information is adjacent to the second sub-extended positioning information, and the second sub-extended positioning information follows the first sub-extended positioning information. The first sub-extended positioning information corresponds to a first period, and the second sub-extended positioning information corresponds to a second period; and
before receiving the training symbols in the second sub-extended positioning information by using the second antenna group, the measurement module 1302 is further configured to switch the antenna array in the positioning node to the second antenna group at a first switching time point, where the first switching time point is a starting time point of the second period; or the first switching time point is a time point that is in the first period and that is at least a first preset duration away from a starting time point of the first period.

In some optional implementations, the extended positioning information is in a free bit of a data field of the transmission packet or in a packet extension field of the transmission packet; or the extended positioning information is in an extended positioning field of the transmission packet, where the extended positioning field is a new field between the data field and the packet extension field.

In some optional implementations, the transmission packet further includes a second indication, where the second indication is used to indicate that the transmission packet represents a response.

In some optional implementations, the transmission packet includes a target quantity of sub-extended positioning information, where the target quantity is a preset quantity or is determined through negotiation between the positioning node and the to-be-measured node.

In some optional implementations, the transmission packet includes a third indication, where the third indication is used to indicate the target quantity.

In some optional implementations, the target quantity is a total quantity of antenna groups in the antenna array.

In some optional implementations, the apparatus further includes a second sending module 1303, configured to send a first negotiation packet to the to-be-measured node before the first receiving module 1301 receives the transmission packet sent by the to-be-measured node, where the first negotiation packet includes at least one of information representing support for the target angle-of-arrival measurement, a quantity of sub-extended positioning information, and a period corresponding to extended positioning information. The first receiving module 1301 is further configured to, before receiving the transmission packet sent by the to-be-measured node, receive a second negotiation packet sent by the to-be-measured node, where the second negotiation packet corresponds to the first negotiation packet.

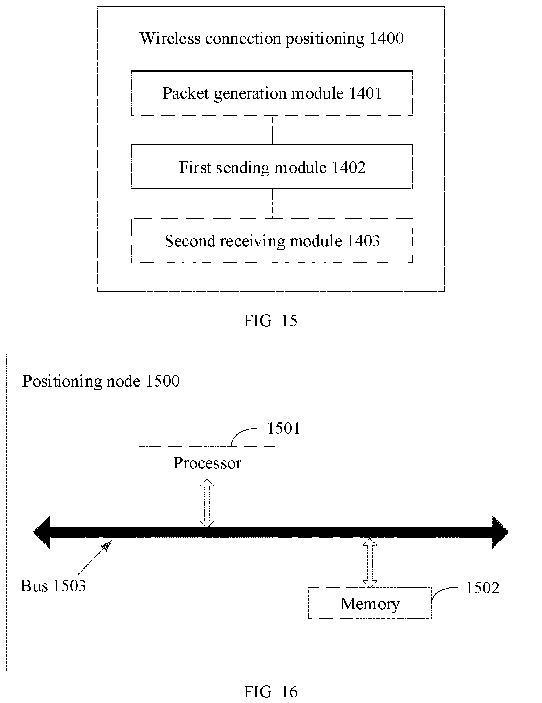

As shown in FIG. 15, based on the same inventive concept as the wireless connection positioning method shown in FIG. 13, an embodiment of this application provides a second wireless connection positioning 1400, which is applied to a to-be-measured node. The apparatus includes:
a packet generation module 1401, configured to place extended positioning information in a transmission packet, and identify a first indication in the transmission packet to indicate a target angle-of-arrival measurement; and
a first sending module 1402, configured to send the transmission packet to a positioning node, so that the positioning node measures an angle of arrival for the to-be-measured node based on training symbols in the extended positioning information.

In some optional implementations, the extended positioning information includes a plurality of pieces of sub-extended positioning information.

In some optional implementations, the plurality of pieces of sub-extended positioning information include first sub-extended positioning information, so that the positioning node receives training symbols in the first sub-extended positioning information by using a first antenna group in an antenna array and measures the angle of arrival for the to-be-measured node based on the training symbols in the first sub-extended positioning information.

In some optional implementations, the plurality of pieces of sub-extended positioning information further include second sub-extended positioning information, so that the positioning node receives training symbols in the second sub-extended positioning information by using a second antenna group in the antenna array and measures the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of LTFs, the second sub-extended positioning information corresponds to a second period, and a duration of the first period is the same as or different from a duration of the second period.

In some optional implementations, the first sub-extended positioning information is adjacent to the second sub-extended positioning information, the second sub-extended positioning information follows the first sub-extended positioning information, the first sub-extended positioning information corresponds to a first period, and the second sub-extended positioning information corresponds to a second period, so that before receiving the training symbols in the second sub-extended positioning information by using the second antenna group, the positioning node switches the antenna array in the positioning node to the second antenna group at a first switching time point, where the first switching time point is a starting time point of the second period; or the first switching time point is a time point that is in the first period and that is at least a first preset duration away from a starting time point of the first period.

In some optional implementations, the packet generation module 1401 is specifically configured to: place the extended positioning information in a free bit of a data field of the transmission packet or in a packet extension field of the transmission packet; or place the extended positioning information in an extended positioning field of the transmission packet, where the extended positioning field is a new field between the data field and the packet extension field.

In some optional implementations, the packet generation module 1401 is further configured to place a second indication in the transmission packet, where the second indication is used to indicate that the transmission packet represents a response.

In some optional implementations, the packet generation module 1401 is configured to place a target quantity of sub-extended positioning information in the transmission packet, where the target quantity is a preset quantity or is determined through negotiation between the positioning node and the to-be-measured node.

In some optional implementations, the packet generation module 1401 is further configured to place a third indication in the transmission packet, where the third indication is used to indicate the target quantity.

In some optional implementations, the target quantity is a total quantity of antenna groups in the antenna array.

In some optional implementations, the apparatus further includes a second receiving module 1403. The first sending module 1402 is further configured to, before the packet generation module 1401 places the extended positioning information in the transmission packet, receive a first negotiation packet sent by the positioning node, where the first negotiation packet includes at least one of information representing support for the target angle-of-arrival measurement, a quantity of sub-extended positioning information, and a period corresponding to extended positioning information. The second receiving module 1403 is further configured to, before the packet generation module 1401 places the extended positioning information in the transmission packet, send a second negotiation packet to the positioning node, where the second negotiation packet corresponds to the first negotiation packet.

For specific implementations of the embodiments in FIG. 14 and FIG. 15, refer to the implementations of the foregoing interaction methods. Repeated parts are not described again.

Based on the same technical concept, an embodiment of this application further provides a positioning node 1500. As shown in FIG. 16, the positioning node includes at least one processor 1501 and a memory 1502 connected to the at least one processor. A specific connection medium between the processor 1501 and the memory 1502 is not limited to this embodiment of this application. FIG. 15 shows an example in which the processor 1501 and the memory 1502 are connected by a bus 1503. Buses may be classified into a path bus, a data bus, a control bus, and the like. For ease of representation, only one bold line is used to represent the bus in FIG. 16, but this does not mean that there is only one bus or only one type of bus.

The processor 1501, as a control center of the positioning node, can connect various parts of the positioning node by using various interfaces and lines, and implement data processing by running or executing instructions stored in the memory 1502 and invoking data stored in the memory 1502. Optionally, the processor 1501 may include one or more processing units. An application processor and a modem processor may be integrated into the processor 1501. The application processor mainly processes an operating system, a user interface, an application program, and the like. The modem processor mainly processes instruction delivery. It may be understood that the modem processor may alternatively not be integrated in the processor 1501. In some embodiments, the processor 1501 and the memory 1502 may be implemented on a same chip. In some embodiments, the processor 1501 and the memory 1502 may also be implemented separately on separate chips.

The processor 1501 may be a general-purpose processor, for example, a central processing unit (CPU), a digital signal processor, an application-specific integrated circuit (ASIC), a field programmable gate array or another programmable logic device, a discrete gate or a transistor logic device, or a discrete hardware component, and may implement or perform the methods, steps, and logical block diagrams disclosed in the embodiments of this application. The general-purpose processor may be a microprocessor or any conventional processor or the like. Steps of the methods disclosed with reference to the embodiments of the wireless connection positioning methods may be directly performed and completed by using a hardware processor, or may be performed and completed by using a combination of hardware in the processor and a software module.

As a non-volatile computer-readable storage medium, the memory 1502 may be configured to store non-volatile software programs, non-volatile computer-executable programs, and modules. The memory 1502 may include at least one type of storage medium, for example, may include a flash memory, a hard disk, a multimedia card, a memory card, a random access memory (RAM), a static random access memory (SRAM), a programmable read-only memory (PROM), a read-only memory (ROM), an electrically erasable programmable read-only memory (EEPROM), a magnetic memory, a magnetic disk, an optical disc, or the like. The memory 1502 is but not limited to any other medium that can be used to carry or store desired program code in a form of an instruction or a data structure and can be accessed by a computer. The memory 1502 in the embodiments of this application may alternatively be a circuit or any other apparatus that can implement a storage function, and is configured to store a program instruction and/or data.

In the embodiments of this application, the memory 1502 stores a computer program. When the computer program is executed by the processor 1501, the processor 1501 is enabled to perform the following: receiving a transmission packet sent by a to-be-measured node, where the transmission packet includes a first indication, the first indication is used to indicate a target angle-of-arrival measurement, and the transmission packet further includes extended positioning information; and
measuring an angle of arrival for the to-be-measured node based on training symbols in the extended positioning information.

In some optional implementations, the extended positioning information includes a plurality of pieces of sub-extended positioning information.

In some optional implementations, the plurality of pieces of sub-extended positioning information include first sub-extended positioning information, and an antenna array in the positioning node includes a first antenna group. The processor 1501 is specifically configured to perform the following: receiving training symbols in the first sub-extended positioning information by using the first antenna group; and measuring the angle of arrival for the to-be-measured node based on the training symbols in the first sub-extended positioning information.

The processor 1501 performs the following: the plurality of pieces of sub-extended positioning information further include second sub-extended positioning information, and the antenna array in the positioning node further includes a second antenna group. The processor 1501 further performs the following: receiving training symbols in the second sub-extended positioning information by using the second antenna group; and the processor 1501 specifically performs the following: measuring the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of long training fields LTFs, the second sub-extended positioning information corresponds to a second period, and a duration of the first period is the same as or different from a duration of the second period.

In some optional implementations, the first sub-extended positioning information is adjacent to the second sub-extended positioning information, and the second sub-extended positioning information follows the first sub-extended positioning information. The first sub-extended positioning information corresponds to a first period, and the second sub-extended positioning information corresponds to a second period. Before receiving the training symbols in the second sub-extended positioning information by using the second antenna group, the processor 1501 further performs the following: switching the antenna array in the positioning node to the second antenna group at a first switching time point, where the first switching time point is a starting time point of the second period; or the first switching time point is a time point that is in the first period and that is at least a first preset duration away from a starting time point of the first period.

In some optional implementations, the extended positioning information is in a free bit of a data field of the transmission packet or in a packet extension field of the transmission packet; or the extended positioning information is in an extended positioning field of the transmission packet, where the extended positioning field is a new field between the data field and the packet extension field.

In some optional implementations, the transmission packet further includes a second indication, where the second indication is used to indicate that the transmission packet represents a response.

In some optional implementations, the transmission packet includes a target quantity of sub-extended positioning information, where the target quantity is a preset quantity or is determined through negotiation between the positioning node and the to-be-measured node.

In some optional implementations, the transmission packet includes a third indication, where the third indication is used to indicate the target quantity.

In some optional implementations, the target quantity is a total quantity of antenna groups in the antenna array.

In some optional implementations, before receiving the transmission packet sent by the to-be-measured node, the processor 1501 further performs the following: sending a first negotiation packet to the to-be-measured node, where the first negotiation packet includes at least one of information representing support for the target angle-of-arrival measurement, a quantity of sub-extended positioning information, and a period corresponding to extended positioning information; and receiving a second negotiation packet sent by the to-be-measured node, where the second negotiation packet corresponds to the first negotiation packet.

Based on the same technical concept, an embodiment of this application further provides a to-be-measured node, including at least one processor and at least one memory. The memory stores a computer program. When the program is executed by the processor, the processor is enabled to perform the following: placing extended positioning information in a transmission packet, identifying a first indication in the transmission packet to indicate a target angle-of-arrival measurement, and sending the transmission packet to a positioning node, so that the positioning node measures an angle of arrival for the to-be-measured node based on training symbols in the extended positioning information.

In some optional implementations, the extended positioning information includes a plurality of pieces of sub-extended positioning information.

In some optional implementations, the plurality of pieces of sub-extended positioning information include first sub-extended positioning information, so that the positioning node receives training symbols in the first sub-extended positioning information by using a first antenna group in an antenna array and measures the angle of arrival for the to-be-measured node based on the training symbols in the first sub-extended positioning information.

In some optional implementations, the plurality of pieces of sub-extended positioning information further include second sub-extended positioning information, so that the positioning node receives training symbols in the second sub-extended positioning information by using a second antenna group in the antenna array and measures the angle of arrival for the to-be-measured node based on the training symbols in the first sub-extended positioning information and the training symbols in the second sub-extended positioning information.

In some optional implementations, the first antenna group is the same as or different from the second antenna group.

In some optional implementations, the first sub-extended positioning information corresponds to a first period, the first period includes durations corresponding to a plurality of long training fields LTFs, the second sub-extended positioning information corresponds to a second period, and a duration of the first period is the same as or different from a duration of the second period.

In some optional implementations, the first sub-extended positioning information is adjacent to the second sub-extended positioning information, the second sub-extended positioning information follows the first sub-extended positioning information, the first sub-extended positioning information corresponds to a first period, and the second sub-extended positioning information corresponds to a second period, so that before receiving the training symbols in the second sub-extended positioning information by using the second antenna group, the positioning node switches the antenna array in the positioning node to the second antenna group at a first switching time point, where the first switching time point is a starting time point of the second period; or the first switching time point is a time point that is in the first period and that is at least a first preset duration away from a starting time point of the first period.

In some optional implementations, the processor specifically performs the following: placing the extended positioning information in a free bit of a data field of the transmission packet or in a packet extension field of the transmission packet; or placing the extended positioning information in an extended positioning field of the transmission packet, where the extended positioning field is a new field between the data field and the packet extension field.

In some optional implementations, the processor further performs the following: placing a second indication in the transmission packet, where the second indication is used to indicate that the transmission packet represents a response.

In some optional implementations, the processor specifically performs the following: placing a target quantity of sub-extended positioning information in the transmission packet, where the target quantity is a preset quantity or is determined through negotiation between the positioning node and the to-be-measured node.

In some optional implementations, the processor further performs the following: placing a third indication in the transmission packet, where the third indication is used to indicate the target quantity.

In some optional implementations, the target quantity is a total quantity of antenna groups in the antenna array.

In some optional implementations, before placing the extended positioning information in the transmission packet, the processor further performs the following: receiving a first negotiation packet sent by the positioning node, where the first negotiation packet includes at least one of information representing support for the target angle-of-arrival measurement, a quantity of sub-extended positioning information, and a period corresponding to extended positioning information; and sending a second negotiation packet to the positioning node, where the second negotiation packet corresponds to the first negotiation packet.

Based on the same technical concept, an embodiment of this application further provides a computer-readable storage medium. The computer-readable storage medium stores a computer program executable by a processor. When the program is running on the processor, the processor is enabled to perform the steps of the foregoing wireless connection positioning method.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operation steps are performed on the computer or the other programmable device, to generate computer-implemented processing. Therefore, the instructions executed on the computer or the other programmable device provide steps for implementing a specific function in one or more procedures in the flowcharts and/or in one or more blocks in the block diagrams.

Although preferred embodiments of this application have been described, a person skilled in the art can make additional changes and modifications to these embodiments once the basic inventive concept is learned. Therefore, the appended claims shall be construed to cover the preferred embodiments and all changes and modifications falling within the scope of this application.

Apparently, a person skilled in the art may make various changes and variations to this application without departing from the spirit and scope of this application. Therefore, this application is intended to cover these modifications and variations of this application provided that they fall within the protection scope defined by the following claims and equivalent technologies thereof.

## Claims

1. A wireless connection positioning method, wherein the method is applied to a positioning node, and the method comprises:
receiving a transmission packet sent by a to-be-measured node, wherein the transmission packet comprises a first indication, the first indication is used to indicate a target angle-of-arrival measurement, and the transmission packet further comprises extended positioning information; and
measuring an angle of arrival for the to-be-measured node based on the extended positioning information.

2. The method according to claim 1, wherein the extended positioning information comprises a plurality of pieces of sub-extended positioning information.

3. The method according to claim 2, wherein the plurality of pieces of sub-extended positioning information comprise first sub-extended positioning information, an antenna array in the positioning node comprises a first antenna group, and
the measuring the angle of arrival for the to-be-measured node based on the extended positioning information comprises:
receiving training symbols in the first sub-extended positioning information by using the first antenna group; and
measuring the angle of arrival for the to-be-measured node based on the training symbols in the first sub-extended positioning information.

4. The method according to claim 3, wherein the plurality of pieces of sub-extended positioning information further comprise second sub-extended positioning information, the antenna array in the positioning node further comprises a second antenna group, and
the method further comprises:
receiving training symbols in the second sub-extended positioning information by using the second antenna group; and
the measuring the angle of arrival for the to-be-measured node based on the training symbols in the first sub-extended positioning information comprises:
measuring the angle of arrival for the to-be-measured node based on the training symbols in the first sub-extended positioning information and the training symbols in the second sub-extended positioning information.

5. The method according to claim 4, wherein the first antenna group is the same as or different from the second antenna group.

6. The method according to claim 5, wherein the first sub-extended positioning information corresponds to a first period, the first period comprises durations corresponding to a plurality of long training fields LTFs, the second sub-extended positioning information corresponds to a second period, and a duration of the first period is the same as or different from a duration of the second period.

7. The method according to claim 4, wherein the first sub-extended positioning information is adjacent to the second sub-extended positioning information, the second sub-extended positioning information follows the first sub-extended positioning information, the first sub-extended positioning information corresponds to a first period, the second sub-extended positioning information corresponds to a second period, and
before the receiving the training symbols in the second sub-extended positioning information by using the second antenna group, the method further comprises:
switching the antenna array in the positioning node to the second antenna group at a first switching time point, wherein
the first switching time point is a starting time point of the second period; or the first switching time point is a time point that is in the first period and that is at least a first preset duration away from a starting time point of the first period.

8. The method according to any one of claims 1 to 7, wherein before the receiving the transmission packet sent by the to-be-measured node, the method further comprises:
sending a first negotiation packet to the to-be-measured node, wherein the first negotiation packet comprises at least one of information representing support for a target angle-of-arrival measurement, a quantity of sub-extended positioning information, and a period corresponding to the extended positioning information; and
receiving a second negotiation packet sent by the to-be-measured node, wherein the second negotiation packet corresponds to the first negotiation packet.

9. A wireless connection positioning method, wherein the method is applied to a to-be-measured node, and the method comprises:
configuring a transmission packet, wherein the transmission packet comprises extended positioning information and a first indication, and the first indication is used to indicate a target angle-of-arrival measurement; and
sending the transmission packet to a positioning node, so that the positioning node measures an angle of arrival for the to-be-measured node based on the extended positioning information.

10. The method according to claim 9, wherein the placing the extended positioning information in the transmission packet comprises:
placing the extended positioning information in a free bit of a data field of the transmission packet or in a packet extension field of the transmission packet; or
placing the extended positioning information in an extended positioning field of the transmission packet, wherein the extended positioning field is a new field between the data field and the packet extension field.

11. The method according to claim 9, wherein the placing the extended positioning information in the transmission packet further comprises:
placing a second indication in the transmission packet, wherein the second indication is used to indicate that the transmission packet represents a response.

12. The method according to claim 9, wherein the placing the extended positioning information in the transmission packet comprises:
placing a target quantity of sub-extended positioning information in the transmission packet, wherein the target quantity is a preset quantity or is determined through negotiation between the positioning node and the to-be-measured node.

13. The method according to claim 12, wherein the placing the extended positioning information in the transmission packet further comprises:
placing a third indication in the transmission packet, wherein the third indication is used to indicate the target quantity.

14. The method according to claim 12, wherein the target quantity is a total quantity of antenna groups in an antenna array in the positioning node.

15. A wireless connection positioning apparatus, wherein the apparatus is applied to a positioning node, and the apparatus comprises:
a first receiving module, configured to receive a transmission packet sent by a to-be-measured node, wherein the transmission packet comprises a first indication, the first indication is used to indicate a target angle-of-arrival measurement, and the transmission packet further comprises extended positioning information; and
a measurement module, configured to measure an angle of arrival for the to-be-measured node based on the extended positioning information.

16. A wireless connection positioning apparatus, wherein the apparatus is applied to a to-be-measured node, and the apparatus comprises:
a packet generation module, configured to configure a transmission packet, wherein the transmission packet comprises extended positioning information and a first indication, and the first indication is used to indicate a target angle-of-arrival measurement; and
a first sending module, configured to send the transmission packet to a positioning node, so that the positioning node measures an angle of arrival for the to-be-measured node based on the extended positioning information.

17. A positioning node, comprising at least one processor and at least one memory, wherein the memory stores a computer program, and when the program is executed by the processor, the processor is enabled to perform the method according to any one of claims 1 to 8.

18. A to-be-measured node, comprising at least one processor and at least one memory, wherein the memory stores a computer program, and when the program is executed by the processor, the processor is enabled to perform the method according to any one of claims 9 to 14.

19. A computer-readable storage medium, wherein the storage medium stores a computer program executable by a computer, and when the program is run on the computer, the computer is enabled to perform the method according to any one of claims 1 to 8 or the method according to any one of claims 9 to 14.

20. A computer program product, wherein the computer program product comprises a computer program, and when the computer program is executed by a processor, the method according to any one of claims 1 to 8 or any one of claims 9 to 14 is implemented.
